# EUROPÄISCHE PATENTSCHRIFT

(11) **EP 3 935 808 B1**
(45) Veröffentlichungstag und Bekanntmachung des Hinweises auf die Patenterteilung: **26.04.2023**
(21) Anmeldenummer: 20718180.1
(22) Anmeldetag: 25.03.2020
(51) Int. Cl.: H04L 7/00

(54) **KRYPTOGRAPHISCH GESCHÜTZTES BEREITSTELLEN EINES DIGITALEN ZERTIFIKATS**
CRYPTOGRAPHICALLY PROTECTED PROVISION OF A DIGITAL CERTIFICATE
FOURNITURE D'UN CERTIFICAT NUMÉRIQUE PROTÉGÉE DE MANIÈRE CRYPTOGRAPHIQUE

(30) Priorität: 15.04.2019 EP 19169200
(43) Veröffentlichungstag der Anmeldung: 12.01.2022
(73) Patentinhaber: Siemens Aktiengesellschaft, 80333 München (DE)
(72) Erfinder: BROCKHAUS, Hendrik, 85579 Unterbiberg (DE); BUSSER, Jens-Uwe, 85579 Neubiberg (DE)
(74) Vertreter: Siemens Patent Attorneys
(86) Internationale Anmeldenummer: PCT/EP2020/058249
(87) Internationale Veröffentlichungsnummer: WO 2020/212101

(56) Entgegenhaltungen:
- EP-B1- 2 863 610
- DE-A1-102015 214 696
- US-A1- 2015 229 475
- US-B1- 10 057 243

## Beschreibung

Die Erfindung betrifft ein Verfahren, eine Sicherheitsanordnung, eine Konfigurationsvorrichtung, ein Gerät sowie eine Ausstellungsstelle zum kryptographisch geschützten Anfordern eines digitalen Zertifikats für das Gerät.

Digitale Zertifikate werden verwendet, um die Authentizität und Integrität bestimmter Eigenschaften von Geräten durch kryptographische Verfahren zu prüfen. Häufig werden Geräte bereits in der Produktion mit einem digitalen Herstellerzertifikat versehen. Dieses Herstellerzertifikat kann dann später beispielsweise als Echtheitsnachweis dienen, und auch zum Anfordern weiterer Zertifikate und anderer Sicherheitsberechtigungsnachweise verwendet werden.

Ist auf dem Gerät noch kein Zertifikat vorhanden, beispielsweise ein gerade neu produziertes Gerät oder auch ein älteres Gerät, das ohne Zertifikat produziert wurde, so wird für eine Erstellung eines ersten Zertifikats, beispielsweise eines Herstellerzertifikats, meist eines der beiden folgenden Verfahren verwendet: Ein Schlüsselpaar, bestehend aus einem privaten und einem öffentlichen Schlüssel, und ein dazugehörendes Zertifikat werden außerhalb des Geräts erzeugt und in das Gerät eingespielt. Dieses Verfahren wird vor allem dann verwendet, wenn das Gerät kein eigenes Schlüsselpaar erzeugen kann oder wenn der private Schlüssel an zentraler Stelle hinterlegt werden soll. Nachteilig ist dabei, dass der private Schlüssel auch außerhalb des Gerätes existiert, dort sicher verwahrt und vertraulich zum Gerät transportiert und anschließend außerhalb des Geräts gegebenenfalls sicher gelöscht werden muss.

Alternativ kann das Schlüsselpaar auch direkt im Gerät erzeugt werden. Der öffentliche Schlüssel wird dann zur Zertifikaterzeugung zu einer Zertifikatausstellungsstelle transportiert. Der private Schlüssel verbleibt im Gerät und kann somit nicht beim Transport manipuliert oder offengelegt werden. Allerdings muss dafür gesorgt werden, dass nur berechtigte Geräte ihre Zertifikatanfragen zur Ausstellungsstelle senden können, beziehungsweise dass Anfragen von unberechtigten Geräten erkannt und abgelehnt werden.

Die US 10 057 243 B1 offenbart ein Verfahren bei dem eine Gateway-Vorrichtung stellvertretend für ein Gerät ohne IP-Adresse ein digitales Zertifikat bei einer Zertifizierungsstelle anfordert und das erhaltene Zertifikat für das Gerät aufbereitet und speichert.

Die EP 2863610 B2 offenbart beispielsweise ein Verfahren zum Bereitstellen mehrerer digitaler Zertifikate für mehrere öffentliche Schlüssel eines Gerätes. Das Anfordern jeweils eines digitalen Zertifikats für einen öffentlichen Schlüssel wird dabei mit einem privaten Schlüssel eines anderen Schlüsselpaars des Geräts signiert, um die Anforderungen miteinander zu verknüpfen und die Veränderung einer einzelnen Anforderung zu erkennen.

Zum Schutz der Vertraulichkeit und zur Authentizität beziehungsweise Integrität einer Datenkommunikation werden üblicherweise sichere Übertragungsprotokolle wie beispielsweise ein Zertifikatverwaltungsprotokoll CMP oder EST, ein Transportschicht-Sicherheitsprotokoll TLS oder ein Internet-Sicherheitsprotokoll IPsec verwendet. Diese Protokolle verwenden jedoch ebenfalls Sicherheitsberechtigungsnachweise wie beispielsweise TLS-Zertifikate, um die Authentizität der Kommunikationspartner und die Integrität der ausgetauschten Nachrichten zu überprüfen.

Allerdings kann sich das Gerät selbst nicht gegenüber einer Ausstellungsstelle authentifizieren, wenn es sich um das Bereitstellen eines ersten Zertifikats für das Geräts handelt, und daher noch keine für das Gerät individuell ausgestellten Berechtigungsnachweise für den Aufbau einer gesicherten Verbindung im Gerät vorhanden sind.

Ist der Übertragungsweg vom Gerät bis zur nächsten Ausstellungsstelle kurz beziehungsweise befinden sich Gerät und Ausstellungsstelle im gleichen Gebäude, so kann diese Übertragungsstrecke durch physikalische oder organisatorische Maßnahmen wie Drahtgitterkäfig oder Kameraüberwachung vor Manipulation durch einen unbefugten Dritten geschützt werden. Dies ist jedoch mit hohen Kosten für Umsetzung und Betrieb verbunden.

Es kann auch ein Gruppenschlüssel, der in der Firmware des Gerätes vorhanden ist, zur Authentisierung verwendet werden. Dieser Gruppenschlüssel ist jedoch für alle Geräte, welche die gleiche Firmware enthalten, identisch. Um jedes Gerät individuell authentisieren zu können, müsste eine Firmware für jedes Gerät angepasst werden, was ebenfalls mit einem erheblichen Mehraufwand verbunden ist.

Es ist somit Aufgabe der vorliegenden Erfindung ein alternatives mit möglichst geringem Zusatzaufwand verbundenes Verfahren zur Absicherung der Bereitstellung von Zertifikatsanfragen zwischen einem Gerät und einer Ausstellungsstelle aufzuzeigen.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zum kryptographisch geschützten Bereitstellen eines digitalen Zertifikats für ein Gerät mit den Charakteristiken, wie im Anspruch 1 beschrieben.

Eine Geräte-individuelle Angabe ist dabei eine für das Gerät, dem das digitale Zertifikat bereitgestellt werden soll, spezifische Angabe, die bevorzugt eindeutig das Gerät kennzeichnet. Dies kann beispielsweise eine Seriennummer des Geräts oder eine dem Gerät zugewiesene Adresse, beispielsweise eine MAC-Adresse sein. Die Geräte-individuelle Angabe kann insbesondere jeder in der Zertifikatanfrage enthaltene Parameter sein. Eine Konfigurationsvorrichtung kann beispielsweise ein Konfigurationsserver sein, der Konfigurationsdaten wie Seriennummer, Typ, Produktionsdatum, Media Access Control (MAC)-Adresse an das Gerät übermittelt. Die Konfigurationsvorrichtung kann aber auch eine Administrationsvorrichtung sein, die mit dem Gerät verbindbar ist, oder auch ein Administrator selbst sein, der über eine Benutzerschnittstelle am Gerät die Geräte-individuelle Angabe eingibt.

Eine derart gebildete Einmal-Sicherheitskennung soll nur einmal und nur für eine bestimmte Zertifikatsanfrage des Geräts, die die Geräte-individuelle Angabe aufweist, benutzt werden. Das Verfahren ist somit unabhängig von einer im Gerät enthaltenen Firmware und insbesondere unabhängig von einer in der Firmware zur Identifizierung des Geräts vorhandenen Kennung. Dadurch kann die gleiche Firmware für alle Geräte verwendet werden. Des Weiteren kann das Verfahren auch von Altgeräten ohne Herstellerzertifikat oder sonstigen Komponenten ohne Zertifikat, beispielsweise Software-Applikationen, zum Anfordern eines ersten digitalen Zertifikats verwendet werden.

In einer vorteilhaften Ausführungsform wird in der Ausstellungsstelle beim Überprüfen der Sicherheitsinformation die Geräte-individuelle Angabe aus der Anfragenachricht ermittelt, die Einmal-Sicherheitskennung in Abhängigkeit von der Geräte-individuellen Angabe und dem Geheimnis ermittelt, daraus wiederum die Sicherheitsinformation in Abhängigkeit von Einmal-Sicherheitskennung ermittelt und der mittels Sicherheitsinformation (PW) gebildete Schutz der Anforderungsnachricht überprüft.

Somit kann die Ausstellungsstelle durch die in der Anfragenachricht enthaltene Geräte-individuellen Angabe die Sicherheitsinformation mit der in der Anforderungsnachricht enthaltenen Sicherheitsinformation vergleichen. Somit kann die Authentizität des Gerätes ohne Zertifikat, sondern lediglich über die Einmal-Sicherheitskennung, überprüft werden.

In einer vorteilhaften Ausführungsform wird die Einmal-Sicherheitskennung mittels einer vorgegebenen ersten Funktion erzeugt, wobei die gleiche erste Funktion in der Ausstellungsstelle und der Konfigurationsvorrichtung bekannt ist und die Sicherheitsinformation entsprechend einer vorgegebenen zweiten Funktion erzeugt wird, wobei die gleiche zweite Funktion der Ausstellungsstelle und dem Gerät bekannt ist.

Somit kann die Einmal-Sicherheitskennung unabhängig vom Gerät erzeugt werden. Die zweite Funktion ist im Gerät bekannt, sodass weitere Information, die dem Gerät vorliegt, in die Sicherheitsinformation eingehen können.

In einer vorteilhaften Ausführungsform sind die erste und die zweite Funktion eine kryptographische Hashfunktion oder eine Kombination mehrerer Hashfunktionen.

Damit kann aus einer ermittelten Sicherheitsinformation nicht auf die Einmal-Sicherheitskennung rückgeschlossen werden. Die zweite Funktion kann insbesondere auch verschleiert implementiert sein, um ein Auslesen der Funktion aus dem Gerät und die Berechnung einer Sicherheitsinformation bei bekannter Einmal-Sicherheitskennung außerhalb des Gerätes durch unbefugte Dritte zu erschweren.

Die Sicherheitsinformation wird zum Schutz der Zertifikatanfragenachricht eingesetzt, beispielsweise als geheimer Parameter (Passwort) für einen auf einen kryptographischen Nachrichtenauthentifizierungscode (HMAC)-basierten Schutz in einem Zertifikatverwaltungsprotokoll CMP. Somit kann eine Veränderung der Anforderungsnachricht effektiv erkannt werden und ein Übermitteln eines gültigen Zertifikats in unerlaubter Weise verhindert werden.

In einer vorteilhaften Ausführungsform werden die Einmal-Sicherheitskennung in einer Konfigurationsvorrichtung zu Konfigurationsdaten für das Gerät hinzugefügt und die Konfigurationsdaten an das Gerät übermittelt.

Dadurch ist keine separate Übermittlung der Einmal-Sicherheitskennung zwischen Konfigurationsvorrichtung und Gerät notwendig. Die Einmal-Sicherheitskennung kann als ein weiteres Konfigurationsmerkmal im Zuge der Gerätekonfiguration in das Gerät eingespielt werden.

In einer vorteilhaften Ausführungsform ist die Geräte-individuellen Angabe mindestens ein in das Zertifikat einzutragendes Zertifikatselement oder Teil eines solchen Elements.

Dies stellt einerseits sicher, dass die Geräte-individuelle Angabe in der Ausstellungsstelle über die Anforderungsnachricht bekannt ist. Zum anderen ist kein separates zusätzliches Informationselement notwendig.

In einer vorteilhaften Ausführungsform wird die Einmal-Sicherheitskennung zusätzlich in Abhängigkeit von einem eindeutigen fortlaufenden Zählerwert, insbesondere einem Erzeugungszeitpunkt der Einmal-Sicherheitskennung und/oder einer konfigurations-spezifischen Kennung erzeugt.

Dies ermöglicht es, die Gültigkeit der Einmal-Sicherheitskennung zeitlich zu beschränken und die Erzeugung einer neuen Einmal-Sicherheitskennung zu einem späteren Zeitpunkt für ansonsten gleiche Geräteparameter zu ermöglichen.

In einer vorteilhaften Ausführungsform wird die Sicherheitsinformation zusätzlich in Abhängigkeit von mindestens einem in der Anforderungsnachricht enthaltenen Zertifikatsanfrageelement abgeleitet.

Dies ermöglicht der Ausstellungsstelle in einfacher Weise einen zur Ermittlung der Sicherheitsinformation notwendigen Parameter, d.h. das Zertifikatsanfrageelement, aus der Zertifikatsanfragenachricht zu entnehmen.

In einer vorteilhaften Ausführungsform wird die Sicherheitsinformation zusätzlich in Abhängigkeit von mindestens einem im Gerät angeordneten Gruppenschlüssel abgeleitet.

Dies ermöglicht es zusätzlich, einen in der Firmware enthaltenen Gruppenschlüssel zusätzlich zur Überprüfung des Gerätes miteinzubeziehen.

In einer vorteilhaften Ausführungsform ist das verwendete Zertifikatsanfrageelement jeweils nur für eine Anforderungsnachricht gültig.

Das Zertifikatsanfrageelement kann beispielsweise der Subjektname in einer Anforderungsnachricht sein, der jeweils für eine Anforderungsnachricht neu vergeben wird. Somit ist sichergestellt, dass auch die Sicherheitsinformation jeweils nur für eine Anforderungsnachricht gültig ist.

Ein zweiter Aspekt, der nicht Teil der Erfindung ist, betrifft eine Sicherheitsanordnung zum kryptographisch geschützten Bereitstellen eines digitalen Zertifikats für ein Gerät, aufweisend eine Konfigurationsvorrichtung, die dazu eingerichtet ist, eine Einmal-Sicherheitskennung in Abhängigkeit von einem Geheimnis und mindestens einer Geräte-individuellen Angabe zu erzeugen und die Einmal-Sicherheitskennung an das Gerät zu übermitteln. Die Sicherheitsanordnung weist des Weiteren
ein Gerät auf, das dazu eingerichtet ist, eine Sicherheitsinformation in Abhängigkeit von der Einmal-Sicherheitskennung zu erzeugen und das Zertifikat mittels einer Anforderungsnachricht, die die Geräte-individuelle Angabe enthält, und die mittels der Sicherheitsinformation kryptographisch geschützt ist, bei einer Ausstellungsstelle anzufordern. Die Sicherheitsanordnung weist des Weiteren
die Ausstellungsstelle auf, die derart ausgebildet ist, die Anforderungsnachricht (Req) mittels der Sicherheitsinformation sowie der Geräte-individuellen Angabe und dem der Ausstellungsstelle bereitgestellten Geheimnis zu überprüfen und ein Zertifikat bei einem positiven Überprüfungsergebnis an das Gerät zu übermitteln.

Eine solche Sicherheitsanordnung ermöglicht es dem Gerät durch die Einmal-Sicherheitskennung von der Ausstellungsstelle authentisiert zu werden.

Ein weiterer Aspekt der Erfindung betrifft eine Konfigurationsvorrichtung zum kryptographisch geschützten Bereitstellen eines digitalen Zertifikats für ein Gerät, die dazu eingerichtet ist, eine Einmal-Sicherheitskennung in Abhängigkeit von einem Geheimnis und mindestens einer Geräte-individuellen Angabe zu erzeugen und die Einmal-Sicherheitskennung an das Gerät zu übermitteln und das beschriebene Verfahren durchzuführen.

Eine solche Konfigurationsvorrichtung unterstützt aktiv eine Überprüfung der Geräteauthentizität gegenüber einer Ausstellungsstelle.

Ein weiterer Aspekt der Erfindung betrifft eine Ausstellungsstelle zum kryptographisch geschützten Bereitstellen eines digitalen Zertifikats für ein Gerät, die dazu eingerichtet ist, eine Anforderungsnachricht mittels der Sicherheitsinformation sowie der Geräte-individuellen Kennung und einem Geheimnis zu überprüfen, und ein Zertifikat bei einem positiven Überprüfungsergebnis zu erzeugen und an das Gerät zu übermitteln.

Ein weiterer Aspekt der Erfindung betrifft ein Computerprogrammprodukt, umfassend ein computerlesbares Medium, das direkt in einen Speicher eines digitalen Computers ladbar ist, umfassend Programmcodeteile, die dazu geeignet sind, die Schritte des beschriebenen Verfahrens durchzuführen.

Sofern es in der nachfolgenden Beschreibung nicht anders angegeben ist, beziehen sich die Begriffe "Erzeugen", "Übermitteln", "Überprüfen", "Konfigurieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Insbesondere soll der Ausdruck "Gerät" als ein elektronisches Gerät mit Datenverarbeitungseigenschaften verstanden werden. Ein Gerät umfasst ein oder mehrere Prozessoren, die beispielsweise als Hauptprozessor, als ein Mikroprozessor oder als ein Mikrocontroller oder auch als digitale Signalprozessoren ausgebildet sind. Eine "Einheit" oder ein "Modul" kann hardwaretechnisch und/oder auch softwaretechnisch implementiert sein. Bei einer hardwaretechnischen Ausbildung umfasst die Einheit mindestens einen Prozessor. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein, die von dem Gerät ausgeführt wird.

Ausführungsbeispiel des erfindungsgemäßen Verfahrens sind in den Zeichnungen beispielhaft dargestellt und werden anhand der nachfolgenden Beschreibung näher erläutert. Es zeigen
- Figur 1: ein Ausführungsbeispiel einer erfindungsgemäßen Sicherheitsanordnung mit jeweils Ausführungsbeispielen einer erfindungsgemäßen Konfigurationsvorrichtung, Ausstellungsstelle sowie eines Gerätes in schematischer Darstellung;
- Figur 2: ein Ausführungsbeispiel des erfindungsgemäßen Verfahrens als Nachrichtenflussdiagramm; und
- Figur 3: eine Anforderungsnachricht gemäß dem erfindungsgemäßen Verfahren in schematischer Darstellung;
- Figur 4: ein Ausführungsbeispiel einer erfindungsgemäßen Konfigurationsvorrichtung in schematischer Darstellung;
- Figur 5: ein Ausführungsbeispiel einer erfindungsgemäßen Ausstellungsstelle in schematischer Darstellung; und
- Figur 6: ein Ausführungsbeispiel eines erfindungsgemäßen Gerätes in schematischer Darstellung.

Einander entsprechende Teile sind in allen Figuren mit den gleichen Bezugszeichen versehen.

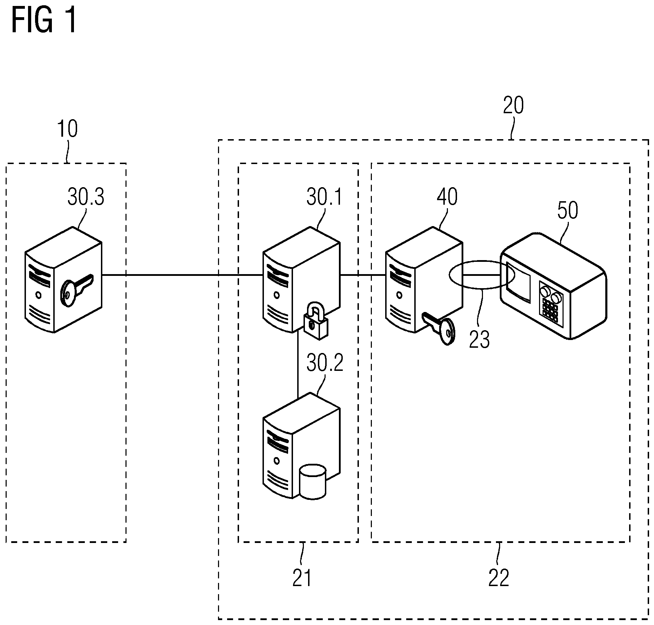

Figur 1 zeigt ein Ausführungsbeispiel einer Sicherheitsanordnung beispielsweise für eine Bereitstellung eines Herstellerzertifikats in ein Gerät 50, einem so genannte Imprinting. Bei einer solchen Erstvergabe eines digitalen Zertifikats für das Gerät 50 ist eine Konfigurationsvorrichtung 40 beispielsweise direkt mit dem Gerät verbunden. Die Konfigurationsvorrichtung 40 kann beispielsweise in der Produktionsumgebung 22 des Gerätes angeordnet sein.

Eine Ausstellungsstelle 30 umfasst im dargestellten Beispiel eine abgesetzt ausgebildete Registrierungsstelle 30.1 mit eine Datenbank 30.2 sowie eine Zertifizierungsstelle 30.3. Die Registrierungsstelle 30.1 ist dazu eingerichtet, eine Anforderungsnachricht, beispielsweise gegenüber Gerätedaten in einer Datenbank 30.2, zu überprüfen und eine Verbindung zur Zertifizierungsstelle 30.3 herzustellen. Die Zertifizierungsstelle 30.3 und auch die Registrierungsstelle 30.1 sowie die damit verbundene Datenbank 30.2 befinden sich üblicherweise in einer geschützten Umgebung, beispielsweise in einem Vertrauenszentrum 10 beziehungsweise einem geschützten Bereich 21 innerhalb der Produktionsumgebung 20. In der Produktionsumgebung 20 sind das Gerät 50, die Konfigurationsvorrichtung 40 sowie die Registrierungsstelle 30.1 sowie Datenbank 30.2 mit einem Fabriknetzwerk verbunden. Die Ausstellungsstelle 30 erstellt das angeforderte digitale Zertifikat beziehungsweise bestätigt die enthaltenen Daten durch eine Signatur mit einem privaten Schlüssel der Ausstellungsstelle 30.

Die einzelnen Komponenten der Ausstellungsstelle 30, d.h. die Zertifizierungsstelle 30.3, die Datenbank 30.2 und die Registrierungsstelle 30.1, sowie die Konfigurationsvorrichtung 40 besitzen digitale Zertifikate, um sich für den Aufbau einer kryptographisch geschützten Datenverbindung zu authentisieren. Somit können kryptographisch geschützte Verbindungen zwischen den Komponenten aufgebaut werden. Allerdings kann sich das Gerät 50 nicht gegenüber der Konfigurationsvorrichtung 40 authentifizieren, da es sich bei der Erstanforderung eines Zertifikats um das initiale Verfahren zur Versorgung des Gerätes 50 mit einem digitalen Zertifikat handelt und daher noch keine Zertifikate oder andere Geräte-individuellen Berechtigungsnachweise für das Aufbauen einer gesicherten Verbindung im Gerät 50 vorhanden sind.

Um eine Authentifizierung des Gerätes 50 auch bei dieser Erstanforderung eines digitalen Zertifikats authentifizieren zu können und die Kommunikationsverbindung 23 zwischen dem Gerät 50 und der Ausstellungsstelle 30 kryptographisch schützen zu können, ist die Konfigurationsvorrichtung 40 dazu eingerichtet, eine Einmal-Sicherheitskennung in Abhängigkeit von einem bereitgestellten Geheimnis S und mindestens einer Geräte-individuellen Angabe zu erzeugen. Das Geheimnis S ist dabei ebenfalls der Ausstellungsstelle 30 bekannt. Das Geheimnis in der Konfigurationsvorrichtung 40 und das Geheimnis in der Ausstellungsstelle 30 sind identisch.

Die Einmal-Sicherheitskennung kann vorteilhafterweise zusammen mit Konfigurationsdaten für das Gerät 50, wie beispielsweise einer Seriennummer, einer Typbezeichnung, einem Produktionsdatum oder einer weiteren Adresse des Geräts von der Konfigurationsvorrichtung 40 an das Gerät übermittelt werden. Das Gerät 50 ist dabei so eingerichtet, eine Sicherheitsinformation in Abhängigkeit von der Einmal-Sicherheitskennung zu erzeugen und das Zertifikat mittels einer Anforderungsnachricht, die die Geräte-individuelle Angabe enthält und die mittels der Sicherheitsinformation kryptographisch geschützt ist, bei der Ausstellungsstelle 30 anzufordern. Die Ausstellungsstelle 30, 30.1 ist derart ausgebildet, die Sicherheitsinformation mittels der Geräte-individuellen Kennung und dem bereitgestellten Geheimnis zu überprüfen und ein Zertifikat bei einem positiven Überprüfungsergebnis an das Gerät 50 zu senden.

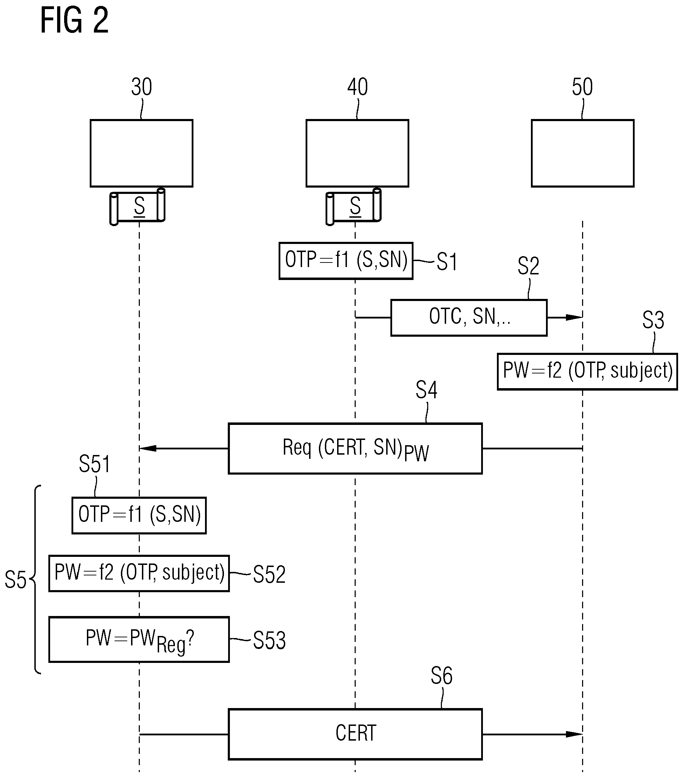

Anhand von Figur 2 sind die einzelnen Schritte des Verfahrens, die die Konfigurationsvorrichtung 40, die Ausstellungsstelle 30 und das Gerät 50 ausführen, näher beschrieben.

Das Geheimnis S sowie eine erste Funktion f1 sind der Ausstellungsstelle 30 und der Konfigurationsvorrichtung 40 bekannt. Die zweite Funktion f2 ist dem Gerät 50 sowie der Ausstellungsstelle 30 bekannt. Das Geheimnis S und die erste Funktion f1 bzw. die zweite Funktion f2 können beispielsweise vor der ersten Zertifikatanfrage der Ausstellungsstelle und der Konfigurationsvorrichtung bzw. der Ausstellungsstelle und dem Gerät zugewiesen worden sein.

In einem ersten Verfahrensschritt S1 erzeugt die Konfigurationsvorrichtung 40 mittels einer ersten Funktion f1 abhängig vom Geheimnis S sowie einer Geräte-individuellen Kennung SN, wie beispielsweise der Seriennummer des Gerätes 50, eine Einmal-Sicherheitskennung OTP. Eine einfache geeignete erste Funktion f1 ist beispielsweise ein kryptographische Hash- oder Nachrichtenauthentisierungscode-Funktion, die beispielsweise obfuskiert in der Konfigurationsvorrichtung 40 vorliegt. Besonders bevorzugt wird als weiterer Eingangsparameter zur Berechnung der Einmal-Sicherheitskennung ein Konfigurationsdatum des Geräts verwendet, das anschließend in das spätere Zertifikat des Gerätes 50 als Zertifikatselement enthalten ist. Bei der Ermittlung der Einmal-Sicherheitskennung OTP können auch weitere Parameter eingehen, wie beispielsweise eine Chargennummer oder ein aktuelles Datum. Über das aktuelle Datum, das beispielsweise das Konfigurationsdatum des Gerätes 50 ist, kann die Gültigkeit zeitlich beschränkt und eine Erzeugung einer neuen Einmal-Sicherheitskennung OTP zu einem späteren Zeitpunkt für ansonsten gleichen Geräteparameter ermöglicht werden.

Im Verfahrensschritt S2 übermittelt die Konfigurationsvorrichtung 40 die Einmal-Sicherheitskennung OTP an das Gerät 50. Dies kann insbesondere zusammen mit der Übermittlung weiteren Konfigurationsdaten an das Gerät 50 erfolgen.

Das Gerät 50 ermittelt im Verfahrensschritt S3 über eine zweite Funktion f2 abhängig von der Einmal-Sicherheitskennung OTP eine Sicherheitsinformation PW. Die zweite Funktion f2 kann dabei beispielsweise die Identität sein, so dass die Sicherheitsinformation PW identisch mit der Einmal-Sicherheitskennung OTP ist. Weitere günstige zweite Funktionen f2 sind beispielsweise eine XOR-Verknüpfung der Einmal-Sicherheitskennung OTP mit einer Geräte-individuellen Kennung SN , wie beispielsweise der Seriennummer, oder Parametern, die in der anschließenden Anforderungsnachricht Req an die Ausstellungsstelle 30 enthalten sind, wie beispielsweise an Subjektnamen. Die Sicherheitsinformation PW kann zusätzlichen in Abhängigkeit von einem Gruppenschlüssel, der beispielsweise in einer Firmware des Geräts 50 enthalten ist, oder von einem Hashwert über in einer Firmware enthaltene Information, ermittelt werden.

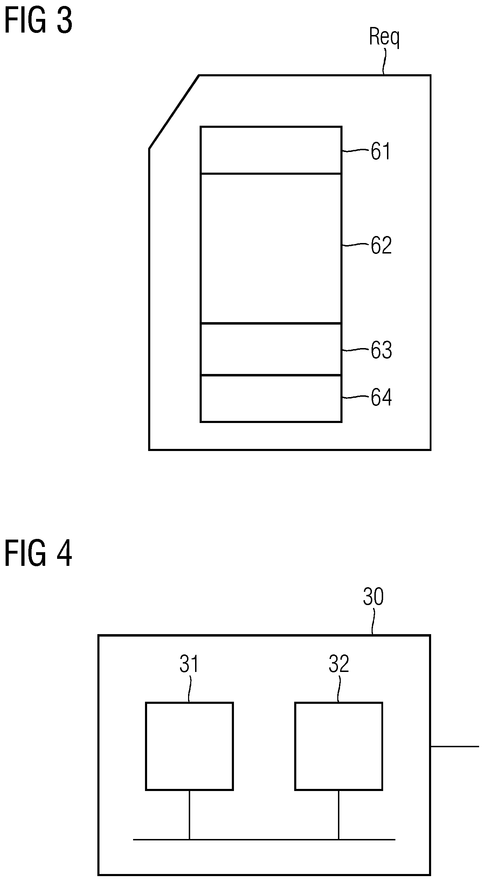

Die Sicherheitsinformation PW wird nun zum kryptographischen Schutz einer Zertifikatanfrage bei einer Ausstellungsstelle 30 verwendet. Dazu wird in Verfahrensschritt S4 vom Gerät 50 ein Anforderungsnachricht Req erzeugt. Die in Figur 3 dargestellte Anforderungsnachricht Req umfasst neben einem üblichen Kopfteil 61 und einem Nachrichtenteil 62. Die Sicherheitsinformation PW kann als digitale Schutzfunktion 63 in die Anforderungsnachricht Req enthalten sein. Die Sicherheitsinformation PW kann aber auch als Schlüssel für eine Berechnung einer Schutzfunktion, beispielsweise eines kryptographischen Nachrichtenauthentisierungscodes (HMAC), verwendet werden und in die Anforderungsnachricht eingebracht werden. Im Nachrichtenteil 64 können weitere Zertifikatparameter enthalten sein. Wird beispielsweise das Zertifikatverwaltungsprotokoll CMP mit einer digitalen Signatur als digitale Schutzfunktion 63 verwendet, so kann Nachrichtenteil 64 zum Transport von weiteren Zertifikaten, die für die Verifikation dieser Signatur notwendig sind, verwendet werden.

Die Ausstellungsstelle 30 empfängt die Anforderungsnachricht Req und bildet anhand des in der Ausstellungsstelle 30 bekannten Geheimnisses S und der Geräte-individuellen Angabe SN, beispielsweise die Seriennummer des Gerätes 50, mit Hilfe der ersten Funktion f1 selbst die Einmal-Sicherheitskennung OTP, siehe Verfahrensschritt S51. Über die zweite Funktion f2, die ebenfalls in der Ausstellungsstelle 30 bekannt ist, wird abhängig von der berechneten Einmal-Sicherheitskennung OTP im Schritt S52 die Sicherheitsinformation ermittelt. Dabei wird in der Ausstellungsstelle 30 die gleiche zweite Funktion f2 und gleiche weitere optionale Eingangsparameter in die zweite Funktion f2 verwendet wie in Gerät 50. Somit kann in der Ausstellungsstelle 30 die gleiche Sicherheitsinformation PW wie in Gerät 50 ermittelt werden. Wenn die Sicherheitsinformation PW wiederum als Eingangsparameter zu weiteren Schutzfunktionen verwendet werden, so müssen zur Überprüfung der Authentizität auch diese Funktionen in der Ausstellungsstelle 30 in gleicher Weise wie im Gerät 50 bekannt sein. Stimmt letztendlich die so in der Ausstellungsstelle 30 ermittelte Sicherheitsinformation PW mit der in der Anforderungsnachricht Req übermittelten Sicherheitsfunktion überein, ergibt sich ein positives Überprüfungsergebnis und die Ausstellungsstelle 30 übermittelt das angeforderte Zertifikat CERT, siehe S6.

Das hier beschriebene Verfahren kann in gleicher Weise auch für das Bereitstellen von ersten operativen Zertifikaten für softwarebasierten Komponenten auf einem Rechner, oder von bereits verbauten Altgeräten ohne Herstellerzertifikat, verwendet werden. In einem solchen Fall kann die Konfigurationsvorrichtung 40 durch einen Administrationsrechner oder auch einen Administrator, der an einer Administrationsoberfläche des Geräts 50 die Einmal-Sicherheitskennung OTP eingibt, ausgebildet sein.

Figur 4 zeigt eine Ausstellungsstelle 30, die als integralen Bestandteil eine Zertifizierungsstelle 30.3 und eine Registrierungsstelle 30.2, nicht dargestellt, umfasst. Die erfindungsgemäße Ausstellungsstelle 30 weist eine Prüfungseinheit 31 auf, die derart ausgebildet ist, die empfangene Anforderungsnachricht Req entsprechend dem vorgenannten Verfahren zu überprüfen. Die Prüfungseinheit 31 ist beispielsweise über einen Datenbus mit einer Ausgabeeinheit 32 verbunden, die bei einem positiven Prüfergebnis das angeforderte Zertifikat an das Gerät sendet. Die Ausstellungsstelle 30 umfasst des Weiteren eine Speichereinheit, in der das Geheimnis S gespeichert und bei Bedarf an die Prüfungseinheit bereitgestellt wird.

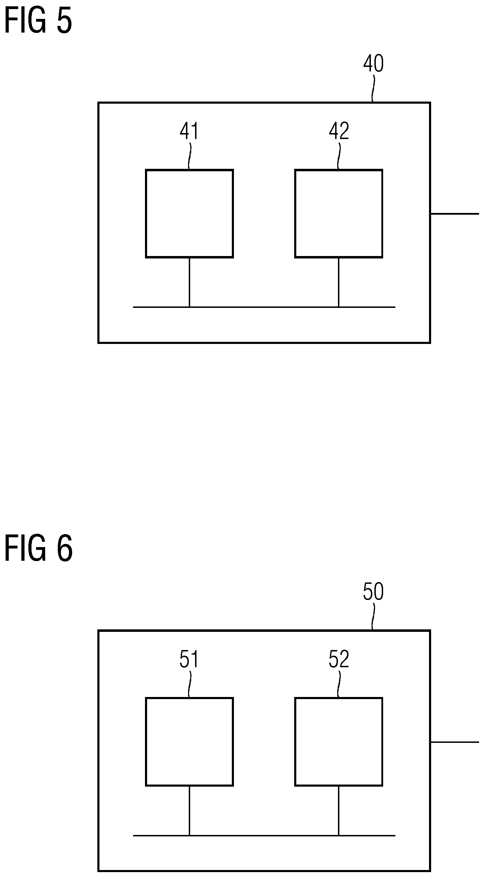

Figur 5 zeigt eine Konfigurationsvorrichtung 40 mit einer Steuereinheit 41 und einem Speicher 42, die beispielsweise über einen Datenbus miteinander verbunden sind. Im Speicher 42 sind beispielsweise Konfigurationsdaten für ein Gerät 50 sowie ein Geheimnis S enthalten. Die Steuereinheit 41 ist derart ausgebildet, die Einmal-Sicherheitskennung OTP abhängig vom Geheimnis S und mindestens einer Geräte-individuellen Angabe SN zu ermitteln und an das Gerät 50 zu übermitteln.

Figur 6 zeigt ein erfindungsgemäßes Gerät 50 mit einer Generierungseinheit 51 und einer Anforderungseinheit 52. Die Generierungseinheit 51 ist derart ausgebildet, die Sicherheitsinformation PW in Abhängigkeit von der empfangenen Einmal-Sicherheitskennung OTP zu erzeugen und an die Anforderungseinheit 52 zu übergeben. Die Anforderungseinheit 52 wiederum erstellt eine Anforderungsnachricht Req für ein digitales Zertifikat, das die mindestens eine Geräte-individuellen Angabe SN, das in bevorzugter Weise als Zertifikatselement in dem angeforderten Zertifikat enthalten ist, umfasst. Die Zertifikatanfragenachricht Req wird um die Sicherheitsinformation PW ergänzt oder durch eine beispielsweise Hashfunktion über die Anforderungsnachricht Req, die mit der Sicherheitsinformation PW als Schlüssel ausgeführt wird, ergänzt. Durch eine so gebildete Hashfunktion kann die Integrität der Anforderungsnachricht Req in der Ausstellungsstelle 30 überprüft werden. Dabei kann die Überprüfung nur dann zu einem positiven Ergebnis führen, wenn auch die Geräte-individuelle Angabe SN in der Anforderungsnachricht Req mit der in der Konfigurationsvorrichtung 40 verwendeten Geräte-individuellen Kennung SN übereinstimmt.

Durch die Geräte-individuelle Angabe SN kann die Einmal-Sicherheitskennung OTP nur ein einziges Mal, nämlich für das entsprechende Gerät, benutzt werden. Wird die gleiche Geräte-individuelle Angabe SN auch für die Bildung der Sicherheitsinformation PW verwendet, so kann die Einmal-Sicherheitskennung OTP auch nur für eine Zertifikatanfrage, die diese Geräte-individuelle Angabe SN, beispielsweise die Seriennummer des Gerätes, enthält, verwendet werden.

Mit dem erfindungsgemäßen Verfahren ist es möglich, die gleiche Firmwareversion für alle Geräte eines Produktionsloses oder einer Baureihe zu verwenden. In gleicher Weise können Geräte oder Softwareanwendungen ohne Herstellerzertifikat nachträglich mit einem solchen Verfahren gesichert ein Zertifikat anfordern und erhalten.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum kryptographisch geschützten Bereitstellen eines digitalen Zertifikats (CERT) für ein Gerät (50), aufweisend die Schritte:
- Erzeugen (S1) einer Einmal-Sicherheitskennung (OTP) in Abhängigkeit von einem Geheimnis (S) und mindestens einer Geräte-individuellen Angabe (SN), in einer Konfigurationsvorrichtung (40),
- Übermitteln (S2) der Einmal-Sicherheitskennung (OTP) an das Gerät (50), und
im Gerät (50)
- Erzeugen (S3) einer Sicherheitsinformation (PW) in Abhängigkeit von der Einmal-Sicherheitskennung (OTP),
- Anfordern (S4) des Zertifikats (CERT) mittels einer Anforderungsnachricht, die die Geräte-individuelle Angabe (SN) enthält und die mittels der Sicherheitsinformation (PW) kryptographisch geschützt ist, bei einer Ausstellungsstelle (30), und
in der Ausstellungsstelle (30)
- Überprüfen (S5) der Anforderungsnachricht (Req) mittels der Sicherheitsinformation (PW) sowie der Geräte-individuellen Angabe (SN) und dem Geheimnis (S), das auch der Ausstellungsstelle (30) bekannt ist, und
- Übermitteln (S6) des Zertifikats (CERT) bei einem positiven Überprüfungsergebnis an das Gerät (50),
wobei das Geheimnis S lediglich in der Ausstellungsstelle (30) und der Konfigurationsvorrichtung (40) bekannt ist.

2. Verfahren nach Anspruch 1, wobei die Ausstellungsstelle (30) beim Überprüfen die Geräte-individuelle Angabe (SN) aus der Anfragenachricht (Req) ermittelt, die Einmal-Sicherheitskennung (OTP) in Abhängigkeit von der Geräte-individuellen Angabe (SN) und dem Geheimnis (S) ermittelt, daraus wiederum die Sicherheitsinformation (PW) in Abhängigkeit von der Einmal-Sicherheitskennung (OTP) ermittelt, und die ermittelte Sicherheitsinformation (PW) mit der zum Schutz der Anforderungsnachricht (Req) verwendeten Sicherheitsinformation (PW) vergleicht.

3. Verfahren nach einem der vorangehenden Ansprüche, wobei die Einmal-Sicherheitskennung (OTP) mittels einer vorgegebenen ersten Funktion (f1) erzeugt wird, wobei die gleiche erste Funktion (f1) in der Ausstellungsstelle (30) und der Konfigurationsvorrichtung (40) bekannt ist, und wobei die Sicherheitsinformation (PW) entsprechend einer vorgegebenen zweiten Funktion (f2) erzeugt wird, wobei die gleiche zweite Funktion (f2) der Ausstellungsstelle (30) und dem Gerät (50) bekannt ist.

4. Verfahren nach Anspruch 2 oder 3, wobei die erste und die zweite Funktion (f1, f2) eine kryptographische Hashfunktion oder eine Kombination mehrerer Hashfunktionen sind, und die zweite Funktion (f2) insbesondere verschleiert implementiert ist.

5. Verfahren einem der vorangehenden Ansprüche, wobei die Einmal-Sicherheitskennung (OTP) in der Konfigurationsvorrichtung (40) zu Konfigurationsdaten für das Gerät (50) hinzugefügt wird, und die Konfigurationsdaten an das Gerät (50) übermittelt werden.

6. Verfahren nach einem der vorangehenden Ansprüche, wobei die Geräte-individuelle Angabe (SN) mindestens ein in das Zertifikat (CERT) einzutragendes Zertifikatselement ist.

7. Verfahren nach einem der vorangehenden Ansprüche, wobei die Einmal-Sicherheitskennung (OTP) zusätzlich in Abhängigkeit von einem eindeutigen fortlaufenden Zählerwert, insbesondere einem Erzeugungszeitpunkt der Einmal-Sicherheitskennung (OTP) und/oder einer Konfigurations-spezifischen Kennung erzeugt wird.

8. Verfahren nach einem der vorangehenden Ansprüche, wobei die Sicherheitsinformation (PW) zusätzlich in Abhängigkeit von mindestens einem in der Anforderungsnachricht (Req) enthaltenen Zertifikatsanfrageelement abgeleitet wird.

9. Verfahren nach einem der vorangehenden Ansprüche, wobei die Sicherheitsinformation (PW) zusätzlich in Abhängigkeit von mindestens einem im Gerät (50) angeordneten Gruppenschlüssel abgeleitet wird.

10. Verfahren nach Anspruch 8, wobei das verwendete Zertifikatsanfrageelement jeweils nur für eine Anforderungsnachricht (Req) gültig ist.

11. Konfigurationsvorrichtung zum kryptographisch geschützten Bereitstellen eines digitalen Zertifikats (CERT) für ein Gerät (50), die dazu eingerichtet ist:
eine Einmal-Sicherheitskennung (OTP) in Abhängigkeit von einem bereitgestellten Geheimnis (S) und mindestens einer Geräte-individuellen Angabe (SN) zu erzeugen, und die Einmal-Sicherheitskennung (OTP) an das Gerät (50), zu übermitteln,
und das Verfahren gemäß einem der Ansprüche 1 bis 10 durchzuführen.

12. Ausstellungsstelle zum kryptographisch geschützten Bereitstellen eines digitalen Zertifikats (CERT) für ein Gerät (50), die dazu eingerichtet ist,
eine Anforderungsnachricht (Req) mittels einer Sicherheitsinformation (PW) sowie einer Geräte-individuellen Angabe (SN) und einem bereitgestellten Geheimnis (S) zu überprüfen, und
das Zertifikat (CERT) bei einem positiven Überprüfungsergebnis an das Gerät (50) zu übermitteln, und das Verfahren gemäß einem der Ansprüche 1 bis 10 durchzuführen.

13. Computerprogrammprodukt, umfassend ein Computerlesbares Medium, das direkt in einen Speicher eines digitalen Computers ladbar ist, umfassend Programmcodeteile, die dazu geeignet sind, die Schritte des Verfahrens nach einem der Ansprüche 1 bis 10 durchzuführen.

## Claims

1. Method for the cryptographically protected provision of a digital certificate (CERT) for a device (50), comprising the steps of:
- generating (S1) a one-time security identifier (OTP) on the basis of a secret (S) and at least one device-specific indication (SN) in a configuration apparatus (40),
- transmitting (S2) the one-time security identifier (OTP) to the device (50), and
in the device (50)
- generating (S3) security information (PW) on the basis of the one-time security identifier (OTP),
- requesting (S4) the certificate (CERT) from an issuing authority (30) by way of a request message that contains the device-specific indication (SN) and that is cryptographically protected by way of the security information (PW), and
in the issuing authority (30)
- checking (S5) the request message (Req) by way of the security information (PW) and the device-specific indication (SN) and the secret (S) that is also known to the issuing authority (30), and
- transmitting (S6) the certificate (CERT) to the device (50) in the event of a positive check result, wherein the secret (S) is known only in the issuing authority (30) and the configuration apparatus (40).

2. Method according to Claim 1, wherein the issuing authority (30) ascertains the device-specific indication (SN) from the request message (Req) during the check, ascertains the one-time security identifier (OTP) on the basis of the device-specific indication (SN) and the secret (S), in turn ascertains the security information (PW) therefrom on the basis of the one-time security identifier (OTP), and compares the ascertained security information (PW) with the security information (PW) used to protect the request message (Req).

3. Method according to either of the preceding claims, wherein the one-time security identifier (OTP) is generated by way of a predefined first function (f1), wherein the same first function (f1) is known in the issuing authority (30) and the configuration apparatus (40), and wherein the security information (PW) is generated in accordance with a predefined second function (f2), wherein the same second function (f2) is known to the issuing authority (30) and to the device (50).

4. Method according to Claim 2 or 3, wherein the first and the second function (f1, f2) are a cryptographic hash function or a combination of a plurality of hash functions, and the second function (f2) is in particular implemented in spoofed form.

5. Method according to one of the preceding claims, wherein the one-time security identifier (OTP) in the configuration apparatus (40) is added to configuration data for the device (50), and the configuration data are transmitted to the device (50) .

6. Method according to one of the preceding claims, wherein the device-specific indication (SN) is at least one certificate element to be entered into the certificate (CERT).

7. Method according to one of the preceding claims, wherein the one-time security identifier (OTP) is additionally generated on the basis of a unique continuous counter value, in particular of a generation time of the one-time security identifier (OTP) and/or of a configuration-specific identifier.

8. Method according to one of the preceding claims, wherein the security information (PW) is additionally derived on the basis of at least one certificate request element contained in the request message (Req).

9. Method according to one of the preceding claims, wherein the security information (PW) is additionally derived on the basis of at least one group key arranged in the device (50).

10. Method according to Claim 8, wherein the certificate request element that is used is valid in each case only for one request message (Req).

11. Configuration apparatus for the cryptographically protected provision of a digital certificate (CERT) for a device (50), which is designed:
to generate a one-time security identifier (OTP) on the basis of a provided secret (S) and at least one device-specific indication (SN), and to transmit the one-time security identifier (OTP) to the device (50), and to perform the method according to one of Claims 1 to 10.

12. Issuing authority for the cryptographically protected provision of a digital certificate (CERT) for a device (50), which is designed
to check a request message (Req) by way of security information (PW) and a device-specific indication (SN) and a provided secret (S), and to transmit the certificate (CERT) to the device (50) in the event of a positive check result, and to perform the method according to one of claims 1 to 10.

13. Computer program product comprising a computer-readable medium that is able to be loaded directly into a memory of a digital computer, comprising program code portions that are suitable for performing the steps of the method according to one of Claims 1 to 10.

## Revendications

1. Procédé pour la mise à disposition protégée par cryptographie d'un certificat numérique (CERT) pour un appareil (50), comprenant les étapes suivantes :
- création (S1) d'un identificateur de sécurité à usage unique (OTP) en fonction d'un secret (S) et d'au moins une indication individuelle d'appareils (SN), dans un dispositif de configuration (40),
- transmission (S2) de l'identificateur de sécurité à usage unique (OTP) à l'appareil (50), et
dans l'appareil (50)
- création (S3) d'une information de sécurité (PW) en fonction de l'identificateur de sécurité à usage unique (OTP),
- requête (S4) du certificat (CERT) au moyen d'un message de requête, qui contient l'indication individuelle d'appareils (SN) et qui est protégé par cryptographie au moyen de l'information de sécurité (PW), auprès d'un organisme émetteur (30),
et
dans l'organisme émetteur (30)
- vérification (S5) du message de requête (Req) au moyen de l'information de sécurité (PW) ainsi que de l'indication individuelle d'appareils (SN) et du secret (S), lequel est également connu de l'organisme émetteur (30), et
- transmission (S6) du certificat (CERT) dans le cas d'un résultat de vérification positif à l'appareil (50),
dans lequel le secret S est connu uniquement dans l' organisme émetteur (30) et le dispositif de configuration (40).

2. Procédé selon la revendication 1, dans lequel l'organisme émetteur (30), lors de la vérification, détermine l'indication individuelle d'appareils (SN) à partir du message de demande (Req), détermine l'identificateur de sécurité à usage unique (OTP) en fonction de l'indication individuelle d'appareils (SN) et du secret (S), ce qui détermine à son tour l'information de sécurité (PW) en fonction de l'identificateur de sécurité à usage unique (OTP), et compare l'information de sécurité (PW) déterminée avec l'information de sécurité (PW) utilisée pour la protection du message de requête (Req).

3. Procédé selon l'une des revendications précédentes, dans lequel l'identificateur de sécurité à usage unique (OTP) est créé au moyen d'une première fonction prédéfinie (f1), dans lequel la même première fonction (f1) est connue dans l'organisme émetteur (30) et le dispositif de configuration (40), et dans lequel l'information de sécurité (PW) est créée en correspondance avec une deuxième fonction prédéfinie (f2), dans lequel la même deuxième fonction (f2) est connue de l'organisme émetteur (30) et de l'appareil (50) .

4. Procédé selon la revendication 2 ou la revendication 3, dans lequel la première et la deuxième fonction (f1, f2) sont une fonction de hachage cryptographique ou une combinaison de plusieurs fonctions de hachage, et la deuxième fonction (f2) est implémentée de manière particulièrement voilée.

5. Procédé selon l'une des revendications précédentes, dans lequel l'identificateur de sécurité à usage unique (OTP) est ajouté dans le dispositif de configuration (40) aux données de configuration pour l'appareil (50), et les données de configuration sont transmises à l'appareil (50).

6. Procédé selon l'une des revendications précédentes, dans lequel l'indication individuelle d'appareils (SN) est au moins un élément de certificat devant figurer dans le certificat (CERT).

7. Procédé selon l'une des revendications précédentes, dans lequel l'identificateur de sécurité à usage unique (OTP) est créé de plus en fonction d'une valeur de compteur continue unique, en particulier d'un instant de création de l'identificateur de sécurité à usage unique (OTP) et/ou d'un identificateur spécifique à la configuration.

8. Procédé selon l'une des revendications précédentes, dans lequel l'information de sécurité (PW) est déduite de plus en fonction d'au moins un élément de demande de certificat contenu dans le message de requête (Req).

9. Procédé selon l'une des revendications précédentes, dans lequel l'information de sécurité (PW) est déduite de plus en fonction d'au moins une clé de groupe disposée dans l'appareil (50).

10. Procédé selon la revendication 8, dans lequel l'élément de demande de certificat utilisé est valide respectivement uniquement pour un message de requête (Req).

11. Dispositif de configuration pour la mise à disposition protégée par cryptographie d'un certificat numérique (CERT) pour un appareil (50), lequel est conçu :
pour créer un identificateur de sécurité à usage unique (OTP) en fonction d'un secret (S) mis à disposition et d'au moins une indication individuelle d'appareils (SN), et pour transmettre l'identificateur de sécurité à usage unique (OTP) à l'appareil (50), et pour mettre en oeuvre le procédé selon l'une des revendications 1 à 10.

12. Organisme émetteur pour la mise à disposition protégée par cryptographie d'un certificat numérique (CERT) pour un appareil (50), lequel est conçu
pour vérifier un message de requête (Req) au moyen d'une information de sécurité (PW) ainsi que d'une indication individuelle d'appareils (SN) et d'un secret (S) mis à disposition, et pour transmettre le certificat (CERT) dans le cas d'un résultat de vérification positif à l'appareil (50), et pour mettre en oeuvre le procédé selon l'une des revendications 1 à 10.

13. Produit de programme informatique, comportant un support lisible par ordinateur, lequel est chargeable directement dans une mémoire d'un ordinateur numérique, comportant des parties de code de programme qui sont appropriées pour mettre en oeuvre les étapes du procédé selon l'une des revendications 1 à 10.
